# DEMANDE DE BREVET EUROPEEN

(11) **EP 1 304 195 A1**
(43) Date de publication de la demande: **23.04.2003**
(21) Numéro de dépôt: 02292547.3
(22) Date de dépôt: 16.10.2002
(51) Int. Cl.: B25J 19/00

(54) **Dispositif de maintien d'élements de faisceau de transport d'énergie à un automate et son application à un robot de soudage**

(30) Priorité: 19.10.2001 FR 0113487
(71) Demandeur: Cimlec Industrie, 78130 Les Mureaux (FR)
(72) Inventeur: Garanchet, Gérard, Sté CIMLEC Industrie, 78130 Les Mureaux (FR); Georgeault, Bernard, Sté CIMLEC Industrie, 78130 Les Mureaux (FR); Georgeault, Benôit, Sté CIMLEC Industrie, 78130 Les Mureaux (FR)
(74) Mandataire: Roger-Petit, Georges

(57) **Abrégé**

L'invention concerne un dispositif de maintien (3) d'éléments d'un faisceau (2-4), dit incident, d'alimentation en énergie d'un automate (1). L'automate (1) comprend une partie mobile (11) reliée au faisceau incident (2-4). Le dispositif (3) comprend un coffret fermé (30) muni de deux orifices, l'un recevant le faisceau incident (2-4) et l'autre un faisceau (8) de jonction entre le coffret (30) et des organes internes à la partie mobile (11) de l'automate (1). Le coffret (30) est fixé à l'extrémité de la partie mobile (11), de manière à se déplacer en synchronisme avec celle-ci. Le coffret (30) comporte des organes de connexions électriques et fluidiques/pneumatiques d'éléments correspondants des faisceaux incident (4) et émergent (8). Le coffret (30) est associé à une perche orientable (6) fixée (60) à l'extrémité de la partie mobile (11) de l'automate (1) et à l'extrémité de laquelle (62) est fixé le faisceau incident (4).

Application notamment aux robots de soudage (1) pour l'industrie automobile.

## Description

La présente invention concerne un dispositif de maintien d'éléments de faisceau de transport d'énergie pour automate comprenant des parties mobiles alimentées par ces éléments.

L'invention concerne encore l'application d'un tel dispositif a un robot de soudage, et plus particulièrement à un robot de soudage pour l'industrie automobile, qui constitue l'application préférée de l'invention.

Dans le cadre de l'invention, le terme "élément de faisceau de transport d'énergie" doit être compris dans son sens le plus général.

Il concerne plus particulièrement des câbles électriques, généralement de forte section dans l'application préférée de l'invention, compte tenu des fortes intensités mises en oeuvre dans les applications de soudage.

Toujours dans le cas de l'application "soudage", il concerne aussi des conduites flexibles de transport de fluide.

Il peut concerner également des conduites flexibles de transport d'air comprimé.

De même, toujours dans le cadre de l'invention, le terme "automate" recouvre de nombreux appareils : robots proprement dits, boîtiers de commande reliés à d'autres appareils par les éléments de faisceau précités, etc., de façon générale tout appareil comprenant une partie mobile alimentée par le faisceau précité.

Pour fixer les idées, on se placera dans ce qui suit dans le cas de l'application préférée de l'invention, à savoir un robot de soudage.

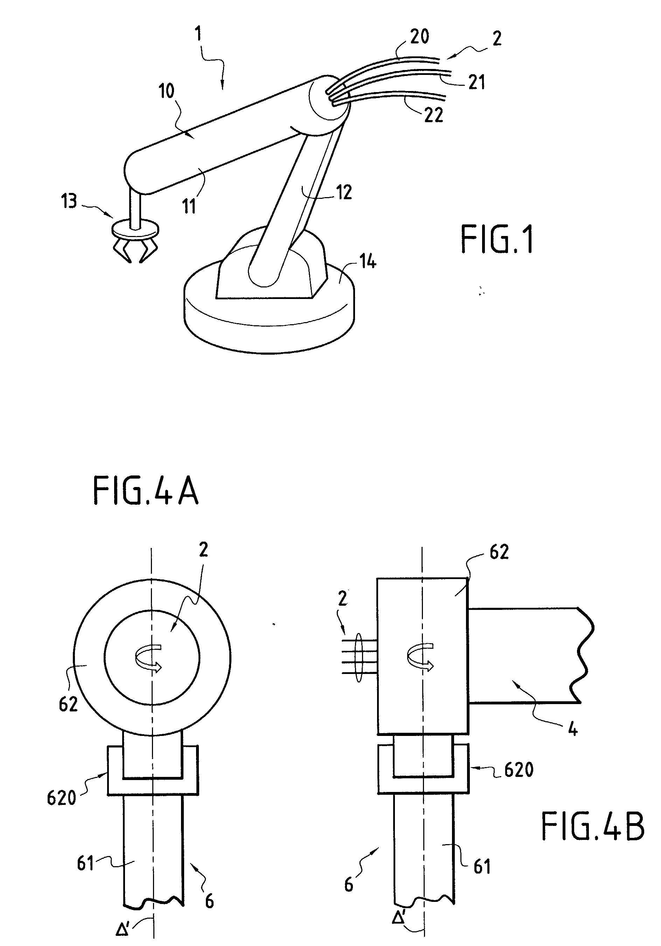

La figure 1 annexée à la présente description illustre très schématiquement un exemple un robot de soudage 1 selon l'art connu muni d'un faisceau de câbles 2 d'amenée de courant électrique et/ou de fluide.

Le robot de soudage comprend habituellement un châssis fixé au sol ou sur un support fixe 14. Il comprend également un bras articulé 10, constitué sur la figure 1, de deux membres 11 et 12, et, à l'extrémité libre du membre 11, un organe de soudage 13 à pinces. Il est naturellement prévu des organes de motorisation (non représentés) mettant mouvement relatif les divers éléments du bras et commandant la pince de soudage 13. On peut ainsi obtenir plusieurs degrés de liberté de mouvement. Le nombre de degrés de liberté dépend du type de robot utilisé et est adapté à l'application précise envisagée.

La fourniture de l'énergie électrique nécessaire, et éventuellement de signaux de commande, est réalisée de façon habituelle à l'aide d'un faisceau 2 de câbles, trois dans l'exemple décrit sur la figure 1, 20 à 22.

Comme il vient d'être indiqué, le faisceau 2 comprend également des conduites flexibles pour le transport de fluide qui n'ont pas été explicitement représentées.

Notamment dans l'application préférée, mais pas exclusivement, les membres, 11 et 12, du bras 10 sont animés de mouvements relatifs rapides et répétés lors des processus de soudage. Il s'ensuit que les câbles, 20 à 22, du faisceau 2 sont également constamment sollicités et subissent des contraintes élevées : forces de traction et de torsion.

Il en résulte une durée de vie relativement faible.

En outre, les câbles, 20 à 22, du faisceau 2 ne sont maintenus que par leur base, points d'entrée dans le bras du robot 1.

Cette caractéristique nuit à la fiabilité des attaches.

Elle ne permet pas non plus d'optimiser les trajectoires des membres du bras du robot.

Enfin, la disposition qui vient d'être décrite suppose que les connexions entre des circuits électriques et/ou fluidiques internes à l'automate et les différents éléments du faisceau s'effectuent exclusivement à l'intérieur du bras mobile de l'automate 1 : bras 11, dans l'exemple de la figure 1.

Dans le cadre de l'invention le terme "connexions" s'applique à tous organes de connectique, tant électrique (que l'on appellera ci-après "connecteurs"), qu'hydraulique et/ou pneumatique (que l'on appellera ci-après "raccords").

Dans la configuration qui vient d'être décrite, si on désire intervenir sur ces connexions : opération de maintenance, de modification, etc., il est nécessaire de démonter l'enceinte du bras.

Le besoin se fait donc aussi sentir de pouvoir intervenir de façon plus aisée sur ces connexions. De façon pratique, cela signifie qu'ils doivent être disposés à l'extérieur de l'enceinte du bras 11. Cependant cette disposition ne doit pas nuire à la fiabilité des connexions. Il est notamment nécessaire qu'elles soient protégées d'un milieu extérieur généralement agressif.

D'autre part, les organes de connexions doivent également assurer, comme il a été rappelé, un guidage efficace des éléments du faisceau et des attaches fiables.

L'invention vise à pallier les inconvénients des dispositifs de l'art connu, et dont certains viennent d'être rappelés

L'invention se fixe pour but un dispositif de maintien d'éléments de faisceau de transport d'énergie pour automate comprenant des parties mobiles alimentées par ces éléments répondant aux besoins qui viennent d'être évoqués, le dispositif assurant aussi les connexions précitées et leur protection.

Pour ce faire, selon une caractéristique importante de l'invention, on prévoit une enceinte fermée renfermant lesdites connexions et disposée de façon fixe dans une zone dite supérieure de la partie mobile de l'automate.

De façon pratique, l'enceinte prend la forme d'un coffret allongé, muni de la connectique précitée et comprenant deux ouvertures : une première ouverture destinée à recevoir les éléments dits incidents du faisceau, et une seconde ouverture destinées à des éléments de faisceau supplémentaires, que l'on appellera émergents, effectuant la jonction entre des circuits ou organes internes de l'automate et cette connectique.

Dans une variante préférée de l'invention, les éléments de faisceaux incidents et émergents sont en outre enfilés dans des gaines de protection, avantageusement en plastique souple.

En ce qui concerne plus particulièrement le faisceau incident, la gaine accompagne celui-ci sur une longueur déterminée. Une des extrémités de la gaine entre dans l'enceinte par la première ouverture.

Dans un mode de réalisation préféré, elle est associée à des moyens élastiques et des moyens de guidage qui permettent, tout à la fois, des mouvements de rotation, autour de l'axe longitudinal du faisceau, et de translation (va et vient), le long de ce même axe.

Enfin, toujours dans un mode de réalisation préféré, l'autre extrémité de la gaine, par laquelle ressortent les éléments du faisceau, est associée à un organe de soutien et de guidage mobile, que l'on appellera ci-après perche orientable. Celle-ci est assujettie à l'extrémité libre du bras de l'automate sur lequel est fixé le coffret précité. Elle permet une rotation du faisceau autour de son axe longitudinal.

L'invention présente plusieurs avantages et notamment simultanément les avantages suivants :
- amélioration de la maintenabilité des faisceaux ;
- amélioration de la durée de vie des faisceaux, en particulier en réduisant les contraintes précitées de traction et de torsion ;
- réduction de l'encombrement des faisceaux autour des zones d'axes des robots, car ceux-ci sont mieux dirigés, ce qui permet d'accroître l'optimisation des trajectoires ; et
- accès aisé aux connexions, tout en les protégeant.

L'invention a donc pour objet principal un dispositif de maintien d'éléments de faisceau d'alimentation en énergie d'un automate comprenant au moins une partie mobile reliée au dit faisceau, caractérisé en ce qu'il comprend une enceinte fermée munie de première et seconde ouvertures, en ce que ladite enceinte fermée est fixée dans une zone d'extrémité de ladite partie mobile, de manière à se déplacer en synchronisme avec celle-ci, en ce que ladite première ouverture est destinée à recevoir ledit faisceau d'alimentation en énergie, dit incident, et ladite seconde ouverture est destinée à recevoir l'une des extrémités d'un faisceau d'alimentation en énergie supplémentaire, dit émergent, constitué d'éléments reliant des organes internes à ladite partie mobile avec ladite enceinte, et en ce que ladite enceinte comporte des moyens de connexions d'éléments correspondants desdits faisceaux incident et émergent.

L'invention sera mieux comprise et d'autres caractéristiques et avantages apparaîtront à la lecture de la description qui suit en référence aux figures annexées, parmi lesquelles :
- la figure 1 illustre très schématiquement un exemple de robot de soudage alimenté en énergie électrique par un faisceau de câbles et conduites selon l'art connu ;
- la figure 2 illustre un dispositif de maintien d'éléments de faisceau de transport d'énergie pour automate sous la forme d'un coffret de raccordement selon un mode de réalisation préféré de l'invention ;
- la figure 3 illustre, dans l'espace, en vue de dessus, une perche orientable, de maintien et de guidage supplémentaires d'éléments de faisceau de transport d'énergie, associée au coffret de la figure 2, selon une variante du mode de réalisation préféré de l'invention ;
- les figures 4A à 4B illustrent des détails de la perche orientable de la figure 3, dans deux positions ; et
- la figure 5 illustre l'ensemble du dispositif de maintien d'éléments de faisceau de transport d'énergie : coffret et perche orientable, en vue de dessus.

On va maintenant décrire un mode de réalisation préféré d'un dispositif de maintien d'éléments de faisceau de transport d'énergie pour automate conforme à l'invention, par référence aux figures 1 à 5. Les éléments communs à une ou plusieurs figures portent la même référence et ne seront re-décrits qu'en tant que de besoin.

L'automate proprement dit peut être d'un type tout à fait semblable sinon identique à celui représenté sur la figure 1, c'est-à-dire à un automate conforme à l'art connu. Il est donc inutile de le re-décrire de nouveau.

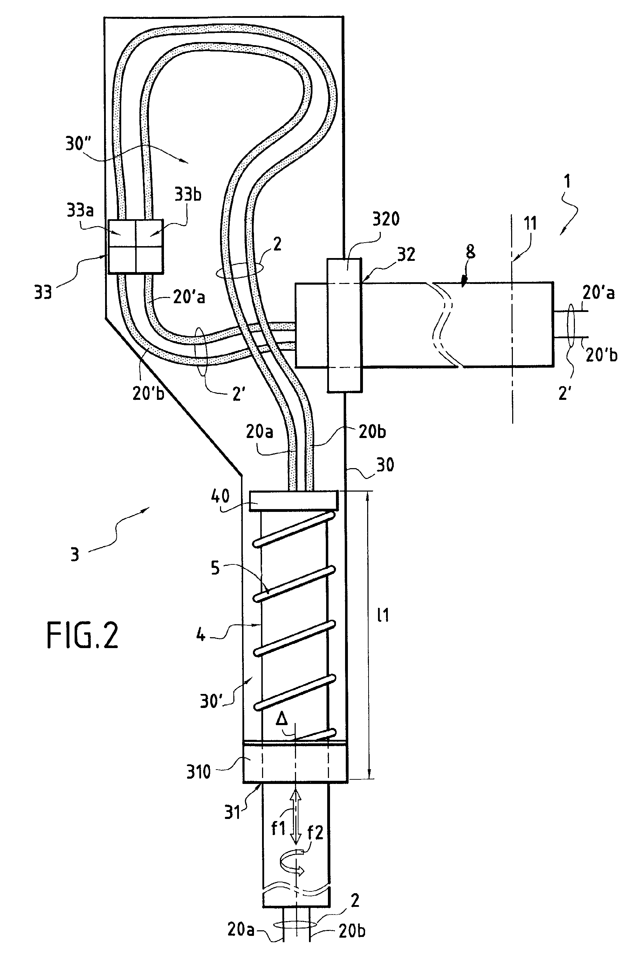

La figure 2 illustre, en vue de dessus, le dispositif proprement dit, 3, de maintien d'éléments de faisceau de transport d'énergie pour automate, ou dispositif principal. Celui-ci comprend un coffret de raccordement 30.

De façon préférentielle, le coffret 30 comporte deux parties distinctes : une partie étroite et allongée 30', et une partie, 30", présentant un volume interne plus important.

La première partie, 30', se termine par une embouchure 31 destinée à recevoir le faisceau, 2, arrivant sur l'automate (figure 1 : 1), plus précisément sur le bras libre 11 (figure 1), que l'on appellera ci-après faisceau incident. Comme dans l'art connu, les éléments composant ce faisceau 2 peuvent être de diverses natures : câbles électriques, conduites hydrauliques et/ou pneumatiques. Pour fixer les idées, on a représenté un seul câble électrique, référencé 20a, et une seule conduite, référencée 20b, étant entendu que dans la réalité le nombre d'éléments est généralement plus important.

Avantageusement, les éléments 20a et 20b sont introduits dans une gaine flexible protectrice 4, en matériau souple et de forme sensiblement cylindrique. Il peut s'agir d'une gaine en matériau plastique de configuration de type "accordéon".

On munit l'embouchure 31 d'une bague de guidage 310 dans laquelle est enfilée la gaine 4 sur une longueur déterminée ℓ₁. Elle est munie sur son extrémité interne au coffret 30 d'un anneau 40 de plus grand diamètre que celui de la gaine 4. On suppose également que l'intérieur de la partie étroite 30' est sensiblement cylindrique et que le diamètre de l'anneau 40 est déterminé de façon à permettre un mouvement de translation le long d'un axe longitudinal moyen Δ du faisceau 2 en sortie du coffret 30, ce sans frottements excessifs.

De façon avantageuse également, on place un moyen élastique, entre la bague 310 et l'anneau 40, par exemple un ressort de type boudin 5 logé dans l'espace laissé libre entre la paroi interne de la partie 30' et la paroi externe de la gaine 4, qu'il entoure.

Lorsque le faisceau 2 est soumis, pendant les mouvements de l'automate 1 (figure 1), via sa gaine de protection 4, à une force de traction l'entraînant vers l'extérieur, le ressort 5 se comprime, et autorise un mouvement de translation suivant un premier sens (retrait de la gaine vers l'extérieur, sans toutefois autoriser son extraction complète). Lorsque la force de traction cesse, le ressort 5 se dilate et rappelle la gaine 4 et le faisceau 2 à sa position initiale.

La bague de guidage 310 doit également permettre un mouvement de rotation autour de ce même axe Δ. Ce double mouvement est symbolisé sur la figure 2 par des flèches f₁ et f₂.

Ces moyens permettent un mouvement de rotation et d'oscillation de l'extrémité de la gaine 4.

En outre, comme il a été indiqué, la partie 30" présente un volume beaucoup important que la partie 30'.

Cette disposition permet tout d'abord de donner du "mou" aux câbles et conduites, 20a et 20b respectivement, qui sortent de la gaine 4, ce qui autorise des mouvements de ceux-ci à l'intérieur de l'enceinte interne de la partie 30" sans risque de rupture ou de contraintes excessives : torsions, étirements, etc.

En outre, elle permet de disposer dans cette enceinte des éléments de connectique 33 : des connecteurs électriques 33a et des raccords fluidiques et/ou pneumatiques 33b pour effectuer des jonctions entre, d'une part, les éléments, 20a et 20b, du faisceau incident 2, et, d'autre part, les éléments correspondants, 20'a et 20'b, du faisceau émergent 2'.

Enfin, elle permet de positionner une seconde ouverture 32 dans une zone appropriée, par exemple sur une paroi de côté comme illustré dans l'exemple de la figure 2. Cette ouverture 32 est munie avantageusement d'une bague 320 permettant la fixation de l'extrémité entrante d'une gaine de protection 5 du faisceau émergent 2'.

Par les dispositions qui viennent d'être décrites en regard de la figure 2, l'invention obtient bien les buts qu'elle s'est fixés, notamment un guidage de bonne qualité du faisceau 2 et de sa gaine de protection 4, sans courir le risque de contraintes élevées, et une protection des connexions. En outre l'accès à celle-ci est aisé : le coffret 30 peut être fixé sur la partie supérieure de l'automate, donc facilement accessible. L'accès à l'intérieur du coffret peut également être rendu aisé : il suffit de le munir d'un couvercle démontable sur sa face supérieure : vis ou organes similaires.

On peut toutefois, dans un mode de réalisation préféré supplémentaire, obtenir un guidage de meilleure qualité encore.

Pour ce faire, on prévoit des moyens de guidage supplémentaires, sous la forme de ce qui sera appelé ci-après une perche de guidage orientable.

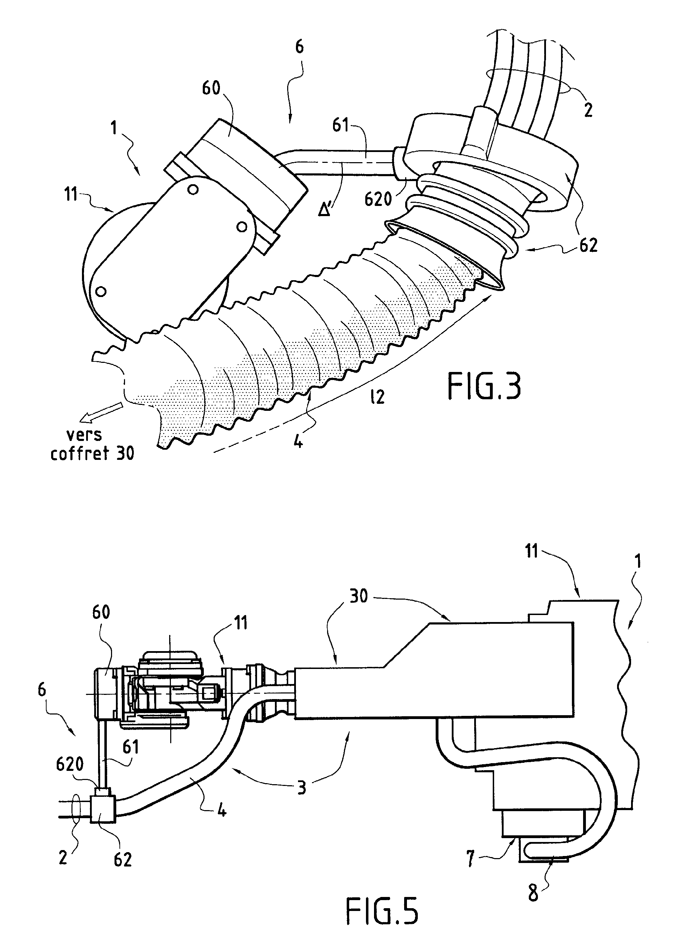

On va maintenant décrire ce mode de réalisation par référence aux figures 3 à 5.

La figure 3 illustre, dans l'espace en vue de dessus, un tronçon de la gaine 4 protégeant le faisceau incident 2. Dans un mode de réalisation pratique, la gaine 4 ne court que sur une longueur déterminée ℓ₂ et non sur toute la distance séparant l'automate 1 d'une armoire de commande ou appareil similaire (non représenté).

Selon le mode de réalisation supplémentaire, on prévoit une perche orientable 6. Celle-ci comprend un socle fixe 60, assujetti à l'extrémité libre du bras 11 de l'automate 1 et un bras 61 orientable en une première extrémité par rapport à ce socle 60. La seconde extrémité du bras 61 supporte un organe 62, de type bague, enserrant et fixant l'extrémité libre de la gaine 4. Cet organe 62 permet une rotation autour de l'axe longitudinal Δ' du bras 61. Pour obtenir ce résultat, il suffit que la bague 62 soit assujettie au bras 61 par l'intermédiaire d'un organe tournant 620 (axe ou similaire).

Les figures 4A et 4B sont des figures partielles de détail, illustrant deux positions de la bague 62 et du faisceau 4-2, représentant une rotation de 90° autour de l'axe Δ'.

Grâce à cette disposition supplémentaire, le bras 61 maintient l'extrémité de la gaine 4, et donc le faisceau 2, proche de son extrémité libre (écartement limité par la longueur du bras 61), quels que soient les mouvements effectués par le bras 61, ce qui optimise la trajectoire du faisceau 2 et son encombrement, ce sans exercer des contraintes importantes sur celui-ci (puisqu'une certaine souplesse est conservée grâce au mouvement de rotation précité autour de l'axe Δ'). Les contraintes exercées sur le faisceau 2 et sa gaine 4, étant par ailleurs, et à titre principal, réduites par les caractéristiques propres au coffret 30, celui-ci assurant simultanément les connexions des éléments de faisceau, leur maintien et leur guidage.

La figure 5 illustre, en vue de dessus, l'ensemble de maintien 3 : coffret 30, fixé sur l'extrémité de bras 10 de l'automate 1, et perche orientable 6 associée. Cette figure permet de mieux comprendre l'agencement de ces éléments et leur coopération. Pour ne pas surcharger le dessin, on n'a référencé que les éléments principaux.

Le faisceau émergent, dans sa gaine 8, pénètre dans le bras 11 par l'intermédiaire d'une structure supplémentaire 7, de type coffret ou similaire, ne participant pas directement à l'invention. Il est donc inutile de la décrire plus avant.

A la lecture de ce qui précède, on constate aisément que l'invention atteint bien les buts qu'elle s'est fixés.

Il doit être clair cependant que l'invention n'est pas limitée aux seuls exemples de réalisations explicitement décrits, notamment en relation avec les figures 2 à 5.

En particulier, les valeurs numériques (nombre de câbles, etc.) n'ont été précisées que pour fixer les idées. Elles dépendent essentiellement de l'application précise visée. Les matériaux utilisables sont ceux généralement mis en oeuvre dans le domaine. En ce sens, l'invention reste compatible avec les technologies courantes, ce qui est un avantage supplémentaire.

Enfin, bien que le dispositif ait été décrit de façon détaillée dans le cas spécifique d'un robot de soudage pour l'industrie automobile, l'invention, comme il a été précédemment indiqué, n'est en aucun cas limité à cette application particulière.

En effet, le dispositif selon l'invention peut trouver application pour tout automate comprenant des parties mobiles alimentées par des éléments de faisceau d'amenée d'énergie, tant électrique que fluidique et/ou pneumatique, comme il a été rappelé.

## Revendications

1. Dispositif de maintien d'éléments de faisceau d'alimentation en énergie d'un automate comprenant au moins une partie mobile reliée au dit faisceau, **caractérisé en ce qu'**il comprend une enceinte fermée (30) munie de première (31) et seconde (32) ouvertures, **en ce que** ladite enceinte fermée (30) est fixée dans une zone d'extrémité de ladite partie mobile (11), de manière à se déplacer en synchronisme avec celle-ci, **en ce que** ladite première ouverture (31) est destinée à recevoir ledit faisceau d'alimentation en énergie (2), dit incident, et ladite seconde ouverture (32) est destinée à recevoir l'une des extrémités d'un faisceau d'alimentation en énergie supplémentaire (2'), dit émergent, constitué d'éléments reliant des organes internes à ladite partie mobile (11) avec ladite enceinte (30), **en ce que** ledit faisceau incident (2) est enfilé dans une gaine souple (4), assurant la protection desdits éléments (20a, 20b) le composant, **en ce que** ladite enceinte fermée (30) comporte des moyens (33) de connexions d'éléments correspondants (20a-20'a, 20b-20'b) desdits faisceaux incident (2) et émergent (2'), **en ce que** ladite enceinte fermée est constituée par un coffret (30) comprenant une première zone (30'), de forme allongée et étroite, destinée à recevoir, sur une longueur déterminée (ℓ₁) l'extrémité de ladite gaine souple (4), dans laquelle est enfilé ledit faisceau incident (2), et **en ce que** ladite première ouverture (31) est munie de moyens (310) permettant un mouvement de rotation et d'oscillation de ladite extrémité (40) de gaine souple (4) autour d'un axe longitudinal moyen (Δ) de celle-ci, ainsi qu'un mouvement de translation le long de ce même axe (Δ).

2. Dispositif de maintien d'éléments de faisceau d'alimentation en énergie d'un automate comprenant au moins une partie mobile reliée au dit faisceau, **caractérisé en ce qu'**il comprend une enceinte fermée (30) munie de première (31) et seconde (32) ouvertures, **en ce que** ladite enceinte fermée (30) est fixée dans une zone d'extrémité de ladite partie mobile (11), de manière à se déplacer en synchronisme avec celle-ci, **en ce que** ladite première ouverture (31) est destinée à recevoir ledit faisceau d'alimentation en énergie (2), dit incident, et ladite seconde ouverture (32) est destinée à recevoir l'une des extrémités d'un faisceau d'alimentation en énergie supplémentaire (2'), dit émergent, constitué d'éléments reliant des organes internes à ladite partie mobile (11) avec ladite enceinte (30), et **en ce que** ladite enceinte (30) comporte des moyens (33) de connexions d'éléments correspondants (20a-20'a, 20b-20'b) desdits faisceaux incident (2) et émergent (2'), **en ce que** ledit faisceau incident (2) est enfilé dans une gaine souple (4), **en ce que** ladite enceinte fermée est constituée par un coffret (30) comprenant une première zone (30'), de forme allongée et étroite, destinée à recevoir, sur une longueur déterminée (ℓ₁) l'extrémité (40) de ladite gaine souple (4), dans laquelle est enfilé ledit faisceau incident (2), **en ce que** ladite extrémité (40) de gaine souple (4) est munie d'un anneau (40) de section plus importante que la section de ladite première gaine souple (4), **en ce qu'**un ressort de rappel (5) est inséré entre ladite bague (301) et ledit anneau (40), d'une part, et entre la paroi interne ladite première zone (30') de ladite enceinte (30) et la paroi externe de ladite première gaine souple (4), d'autre part, de manière à l'entourer et à exercer une force de rappel lorsque ladite première gaine (4) est sollicitée par une force de traction tendant à entraîner son extrémité hors de ladite enceinte fermée (30).

3. Dispositif l'une des revendications 1 ou 2, **caractérisé en ce que** ledit faisceau émergent (2') est enfilé dans une seconde gaine souple (8), assurant la protection desdits éléments (20'a, 20'b) le composant

4. Dispositif la revendication 3, **caractérisé en ce que** ladite enceinte fermée (30) comprend une deuxième zone (30") de plus grand volume que ladite première zone (30'), **en ce que** ladite deuxième zone (30") renferme lesdits moyens de connexion (33), **en ce que** ladite seconde ouverture (32) débouche à l'intérieur de ladite deuxième zone (30") et **en ce que** ladite seconde ouverture (32) est munie d'une bague (320) de fixation d'une des extrémités de ladite seconde gaine (8) dans laquelle est enfilé ledit faisceau émergent (2'), l'autre extrémité pénétrant (7) dans ladite partie mobile (11) dudit automate (1).

5. Dispositif selon l'une quelconque des revendications précédentes, **caractérisé en ce que** l'extrémité de ladite partie mobile (11) dudit automate (1) comporte des moyens supplémentaires (6) de maintien dudit faisceau incident (2-4) comprenant un support (60) fixé sur ladite partie mobile (11), un bras (61) relié au dit support (60) en une première extrémité et orientable par rapport à ce support (60), et **en ce que** ledit bras (61) est muni, en une seconde extrémité, d'une bague (62) de fixation dudit faisceau incident (2-4), à une distance déterminée (ℓ₂) de ladite enceinte fermée (30), et de moyens (620) autorisant une rotation de ladite bague (62) autour d'un axe longitudinal (Δ') dudit bras (61).

6. Dispositif selon l'une quelconque des revendications précédentes, **caractérisé en ce que** lesdits éléments sont des câbles flexibles (20a-20'a) véhiculant une énergie électrique et **en ce que** lesdits moyens de connexions d'éléments correspondants sont des connecteurs électriques (33a).

7. Dispositif selon l'une quelconque des revendications précédentes, **caractérisé en ce que** lesdits éléments sont des conduites flexibles (20b-20'b) véhiculant une énergie fluidique et/ou pneumatique et **en ce que** lesdits moyens de connexions d'éléments correspondants sont des raccords fluidiques et/ou pneumatiques (33b).

8. Application d'un dispositif selon l'une quelconque des revendications précédentes à un robot de soudage (1) pour l'industrie automobile.
